# EUROPÄISCHE PATENTSCHRIFT

(11) **EP 3 018 405 B1**
(45) Veröffentlichungstag und Bekanntmachung des Hinweises auf die Patenterteilung: **02.08.2017**
(21) Anmeldenummer: 14003757.3
(22) Anmeldetag: 08.11.2014
(51) Int. Cl.: F16M 13/00, F16M 13/02, G01D 11/30, G01M 99/00, F22B 37/00

(54) **Engspaltprüfsystem**
Thin gap testing system
Système de contrôle à intervalles serrés

(43) Veröffentlichungstag der Anmeldung: 11.05.2016
(73) Patentinhaber: Westinghouse Electric Germany GmbH, 68167 Mannheim (DE)
(72) Erfinder: Riecker, Alexander, 68159 Mannheim (DE); Röllig, Christian, 69126 Heidelberg (DE); Meissner, Jens, 68167 Mannheim (DE); Obierai, Wolfgang, 64683 Einhausen (DE); Souvannavong, Phetoury, 68159 Mannheim (DE)
(74) Vertreter: Eickmeyer, Dietmar

(56) Entgegenhaltungen:
- EP-A1- 0 297 541
- WO-A1-2010/058624
- US-A1- 2010 011 522

## Beschreibung

Die Erfindung betrifft ein Engspaltprüfsystem, umfassend ein sich in axialer Richtung erstreckendes zu prüfendes Rohr, insbesondere ein Dampferzeugerrohr, sowie eine von diesem mit einem hohlzylindrischen Spalt radial beabstandete, umgebende Hülle, insbesondere ein Hüllrohr. Die Erfindung betrifft auch ein Verfahren zum Installieren eines Engspaltprüfsystems. Ein solches Prüfverfahren ist zum Beispiel in Dokument EP 0 297 541 A1 offenbart. Es ist allgemein bekannt, dass in kerntechnischen Reaktoranlagen Dampferzeuger zum Einsatz kommen. In einer speziellen Ausführungsform ist eine Vielzahl von zylinderähnlichen Dampferzeugern sternförmig um einen Kernreaktor angeordnet. Jeder einzelne Dampferzeuger hängt mit seinen einzelnen Komponenten hierbei an einem in seiner Mitte befindlichen Dampferzeugerrohr, einem sogenannten "Boiler Spine", welches das gesamte Gewicht des Dampferzeugers trägt. Ein solches Dampferzeugerrohr weist aufgrund der hohen Gewichtsbelastung eine Wandstärke von ca. 30mm - 35mm auf, wobei der Rohrdurchmesser über 500mm beträgt. Aus thermischen Gründen ist ein derartiges Dampferzeugerrohr typischer Weise von einem Hüllrohr umgeben, welches dieses in einem Spaltabstand von ca. 8mm bis 15mm umgibt und welches eine thermische Schutzfunktion wahrnimmt.

Um ein Höchstmaß an Sicherheit zu gewährleisten sind Dampferzeugerrohre, insbesondere auch deren Schweißverbindungen, in bestimmten zeitlichen Abständen Prüfungen zu unterziehen, um sicher ausschließen zu können, dass eine Materialermüdung oder eine sonstige Beschädigung des jeweiligen Dampferzeugerrohres aufgetreten ist. Bei einer derartigen Prüfung ist das Dampferzeugerrohr von außen mit entsprechenden Prüfvorrichtungen vorzugsweise in einem Raster abzufahren. Unter Prüfvorrichtungen sind im Rahmen dieser Erfindung alle erdenklichen Arten von Messsonden wie Ultraschallsonden oder dergleichen zu verstehen, aber auch interagierende Werkzeuge, mit welchen beispielsweise von bestimmten Oberflächenbereichen der Außenwandung eines Dampferzeugerrohrs Proben entnommen werden können. Zum Verfahren von derartigen Prüfsystemen sind Manipulatoren bekannt, welche auf schienenähnlichen Ringen, die um das frei zugängliche Rohr zu montieren sind, um dessen Radius verfahrbar sind.

Als nachteilig erweist sich in diesem Zusammenhang, dass die Zugänglichkeit eines verbauten Dampferzeugerrohres durch das dieses umgebende Hüllrohr stark eingeschränkt ist. Das Spaltmaß zwischen Dampferzeugerrohr und Hüllrohr beträgt beispielsweise lediglich 10mm, was den Einsatz konventioneller Techniken für eine Prüfung eines von einem Hüllrohr umgebenen Dampferzeugerrohr ausschließt. Eine Demontage des Hüllrohres für den Zeitraum einer Prüfung ist aufgrund des hohen damit verbundenen Aufwandes nicht praktikabel.

Ausgehend von diesem Stand der Technik ist es Aufgabe der Erfindung, ein Engspaltprüfsystem bereitzustellen, welches auch bei einem sehr engen Spalt in einfacher Weise ein Platzieren einer Prüfvorrichtung über einem verbauten zu prüfenden Rohr, insbesondere einem Dampferzeugerrohr, welches von einer Hülle beziehungsweise einem Hüllrohr umgeben ist, ermöglicht. Aufgabe der Erfindung ist es auch, ein Verfahren zum Installieren eines Engspaltprüfsystems anzugeben.

Die Aufgabe wird gelöst durch ein Engspaltprüfsystem der eingangs genannten Art. Dieses ist dadurch gekennzeichnet, dass die Hülle eine sich axial erstreckende Öffnung mit einem quer zur axialen Richtung verlaufenen Öffnungswinkel aufweist und dass radial oberhalb der Öffnung ein axial verfahrbares Trägersystem vorgesehen ist, welches einen im Spalt angeordneten um das zu prüfende Rohr drehbaren Ring mit einer Prüfvorrichtung trägt, welche durch ein jeweiliges axiales Verfahren des Trägersystems und eine jeweilige Drehung des Rings im Spalt über dem Dampferzeugerrohr platzierbar ist.

Die Grundidee der Erfindung besteht darin, einen Ring in dem hohlzylindrischen Spalt zu platzieren, welcher ein entsprechendes Prüfsystem trägt. Die Höhe von Prüfsystem und Ringdicke sind so zu wählen, dass sie das Spaltmaß nicht übersteigen, beispielsweise 8mm, wobei die axiale Länge eines Ringes beispielsweise 250mm betragen kann. Durch eine axiale Bewegung des Ringes längs der axialen Erstreckung der Öffnung beziehungsweise eine Drehung desselben lässt sich eine Prüfvorrichtung rasterähnlich über dem zu prüfenden Dampferzeugerrohr platzieren. Eine Öffnung muss nicht notwendigerweise über ihre gesamte axiale Länge ein und denselben Öffnungswinkel aufweisen, dieser kann durchaus variieren sofern die Erreichbarkeit für das Trägersystem gegeben ist.

Alle weiteren Komponenten des Prüfsystems, welche zu groß sind, als dass sie in dem Spalt positioniert werden könnten, werden radial oberhalb einer zu schaffenden Öffnung in der Hülle beziehungsweise im Hüllrohr vorgesehen, welche beispielsweise 1,5m lang ist und einen Öffnungswinkel von 90° aufweist. Dies betrifft insbesondere das Trägersystem für den Ring, welches zusammen mit diesem axial verfahrbar ist und welches dafür vorgesehen ist, den im Spalt befindlichen Ring zu drehen. Durch die Schaffung einer Öffnung im Hüllrohr und das Anordnen aller voluminösen Komponenten radial oberhalb der Öffnung ist in vorteilhafter Weise ermöglicht, auch bei vorhandenem Hüllrohr mittels des Trägersystems eine Prüfvorrichtung innerhalb des Spaltes zu verfahren.

Vorzugsweise ist die Prüfvorrichtung dafür vorgesehen, die Außenfläche des radial inneren Rohres zu prüfen, selbstverständlich lässt sich mit dem Prüfsystem aber auch die Innenfläche der radial äußeren Hülle prüfen. Die radial äußere Hülle kann ein thermisches Schutzrohr sein, welches das zu prüfende Rohr umgibt. Eine Hülle kann aber auch eine sonstige Wandung darstellen, welche das zu prüfende Rohr auch nicht über den ganzen Umfang umschließen muss. Von Bedeutung ist, dass das zu prüfende Rohr vollumfänglich von einem hohlzylindrischen Spalt beziehungsweise einem Freiraum oder Engspalt umgeben ist, so dass der Einsatz des erfindungsgemäßen Prüfsystems ermöglicht ist. Die Erfindung ist somit zur Prüfung einer Vielzahl von Rohrarten mit einem diese umgebenden hohlzylindrischen Spalt beziehungsweise Engspalt geeignet, wie sie gerade in kerntechnischen Anlagen vielerorts anzutreffen sind.

Gemäß einer besonderen Ausgestaltungsform des erfindungsgemäßen Engspaltprüfsystems ist die Prüfvorrichtung mit dem Ring über ein sich axial im Spalt erstreckendes flaches Verbindungselement verbunden und die Prüfvorrichtung dadurch auch in axialen Spaltbereichen, längs welcher sich die Öffnung nicht erstreckt, platzierbar. Der Einsatz eines derartigen Schwertes verlängert in vorteilhafter Weise die axiale Reichweite des Engspaltprüfsystems, welches ohne Verbindungselement beziehungsweise Schwert etwa auf die axiale Länge der Öffnung beschränkt wäre. Bei einer Länge von Schwert und Öffnung von jeweils 1,5m lässt sich bei Montage des Schwertes auf der einen Seite des Ringes und danach auf der anderen Seite des Ringes eine axiale Prüflänge von insgesamt ca. 4,5m abdecken. Im beziehungsweise am Schwert sind die benötigten Anschlussleitungen für die Prüfvorrichtung vorzusehen, welche je nach Art der Prüfvorrichtung variieren können. Deshalb bilden Prüfvorrichtung und Schwert idealerweise eine Einheit, welche gegen eine andere Einheit austauschbar ist, wenn beispielsweise eine andere Sonde benötigt wird.

Entsprechend einer weiteren Ausgestaltungsform des erfindungsgemäßen Engspaltprüfsystems ist am ringseitigen Ende des flachen Verbindungselementes ein quer zur axialen Richtung in die Öffnung eingeführtes Flachbandkabel vorgesehen, welches Anschlussleitungen für die Prüfvorrichtung aufweist. Durch Verwendung eines Flachkabels ist ein Verdrillen der Leitungen bei einer Drehbewegung des Ringes ausgeschlossen, vielmehr wird das Flachbandkabel bei einer Drehbewegung ähnlich wie auf eine Rolle aufgewickelt, beispielsweise in eine entsprechende umlaufende Vertiefung des Ringes.

Einer weiteren Erfindungsvariante folgend übersteigt die axiale Länge des flachen Verbindungselementes die axiale Länge der Öffnung nicht und dieses ist in axialer Ausrichtung durch die Öffnung in den Spalt einführbar. Der Einbau eines Engspaltprüfsystems an ein von einem Hüllrohr umgebenes Dampferzeugerrohr wird damit in vorteilhafter Weise vereinfacht.

In einer weiteren Variante des erfindungsgemäßen Engspaltprüfsystems besteht der Ring aus mehreren kreisförmig verbundenen Ringsegmenten, wobei das Bogenmaß eines jeweiligen Ringsegmentes derart gewählt ist, dass dieses quer zur axialen Richtung ausgerichtet durch die Öffnung in den Spalt einführbar ist. Durch das Verwenden mehrerer, beispielsweise 5 oder 6, Ringsegmente lässt sich ein das Dampferzeugerrohr umschließender Ring stückweise in den Spalt einbringen. Die Ringsegmente, welche beispielsweise aus Edelstahl oder Aluminium gefertigt sind, können durch eine jeweilige Bolzen- oder Scharnierverbindung steif miteinander verbunden sein beziehungsweise verbunden werden.

In einer bevorzugten Ausgestaltungsform des erfindungsgemäßen Engspaltprüfsystems weist das Trägersystem eine Antriebsvorrichtung zum axialen Verfahren auf. Diese ihrerseits kann einen Motor sowie Abtriebsrollen beziehungsweise Zahnräder aufweisen, welche beispielsweise mit einer entsprechenden Zahnstange in Wirkverbindung stehen. Ein automatisiertes Prüfen wird auf diese Weise in vorteilhafter Weise vereinfacht.

Gemäß einer besonders bevorzugten Variante des Engspaltprüfsystems weist das Trägersystem eine Antriebsvorrichtung zum Drehen des Ringes auf. Diese beinhaltet idealerweise gleichzeitig eine Führungsvorrichtung für den Ring, so dass dieser relativ zum Trägersystem drehbar gelagert ist, beispielsweise ein jeweiliges Gleitlager, durch welches der Ring an seinen seitlichen Querschnittskanten umschlossen ist. Auch hierdurch wird ein automatisiertes Prüfen in vorteilhafter Weise vereinfacht.

Gemäß einer weiteren Ausführungsform des Engspaltprüfsystems weist der Ring wenigstens eine umlaufende Reihe von äquidistant angeordneten Eingriffslöchern auf, mittels welcher eine Drehbewegung der Antriebsvorrichtung zum Drehen des Ringes auf diesen übertragbar ist. Die umlaufende Reihe Eingriffslöcher hat hierbei die Funktion einer Zahnstange, in welche ein Zahnrad der entsprechenden Antriebsvorrichtung eingreift, welche im Trägersystem angeordnet ist. Statt Eingriffslöchern sind auch Eingriffsmulden denkbar. Auch eine Übertragung der Drehbewegung mittels Haftreibung, beispielsweise durch ein Gummirad, ist möglich.

Entsprechend einer weiteren Variante des erfindungsgemäßen Engspaltprüfsystems ist wenigstens eine mit dem Hüllrohr verbundene axiale Führungsschiene vorgesehen, auf welcher das Trägersystem zusammen mit dem Ring verfahrbar ist. Derartige Führungsschienen können an das Hüllrohr beispielsweise temporär angeschweißt oder angeschraubt werden. Auch hier ist die Verwendung einer Zahnstange vorteilhaft, weil so ein Schlupf des Antrieb ausgeschlossen ist und eine Positionierung des Trägersystems mit dem von diesem getragenen Ring mit hoher Genauigkeit durchführbar ist. Idealerweise bildet das Trägersystem mit den Führungsschienen eine vorgefertigte Einheit, welche dann an zumindest einem Ende der Führungsschienen mit der Hülle verbunden wird. Die Montage wird hierdurch vorteilhaft vereinfacht.

Einer besonders bevorzugten Erfindungsvariante folgend ist der Ring um wenigstens 360° drehbar. Somit kann der gesamte Umfang des Dampferzeugerrohrs problemlos abgerastert werden.

Gemäß einer besonders bevorzugten Ausgestaltungsform des erfindungsgemäßen Engspaltprüfsystems weist dieses eine Steuervorrichtung auf, mittels welcher eine axiale Verfahrbewegung des Trägersystems sowie eine Drehbewegung des Ringes koordinierbar ist. Eine Steuervorrichtung kann beispielsweise eine Rechenvorrichtung mit Bildschirmausgabegerät und Bedienpanel sein, welche auch eine Interaktion mit der Prüfvorrichtung ermöglicht.

Die erfindungsgemäße Aufgabe wird auch durch ein Verfahren zum Installieren eines Engspaltprüfsystems mit einem sich in axialer Richtung erstreckenden zu prüfenden Dampferzeugerrohr sowie einem von diesem in einem hohlzylindrischen Spalt radial beabstandeten umgebenden Hüllrohr gelöst. Dieses umfasst folgende Schritte:
- Vorsehen einer sich axial erstreckenden Öffnung im Hüllrohr mit einem quer zur axialen Richtung verlaufenen Öffnungswinkel,
- sequentielles Einführen und kreisförmiges Verbinden von mehreren Ringsegmenten zu einem drehbaren Ring im Spalt,
- Verbinden einer sich längs der Öffnung erstreckenden Führungsschiene mit dem Hüllrohr,
- Vorsehen eines auf der Führungsschiene beweglichen Trägersystems für den Ring, mittels welcher dieser im Spalt längs der Öffnung axial verfahrbar und drehbar ist.
- Verbinden einer Prüfvorrichtung mit dem Ring,

Die entsprechenden Vorteile des damit installierten Prüfsystems wurden schon zuvor erläutert. Nach Abschluss der Prüfung ist das Engspaltprüfsystem wieder zu demontieren und die Öffnung des Hüllrohres wieder zu schließen, beispielsweise mittels Anschweißen des zuvor entfernten Rohrhüllenabschnittes.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: einen exemplarischen Kernreaktor mit Dampferzeugerrohren,
- Fig. 2: ein erstes exemplarisches Dampferzeugerprüfsystem,
- Fig. 3: ein zweites exemplarisches Dampferzeugerprüfsystem sowie
- Fig. 4: einen segmentierten Ring.

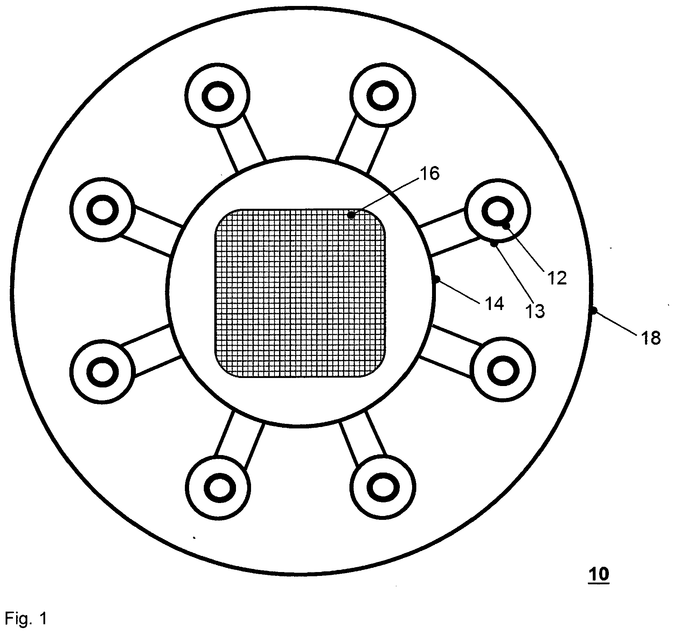

Fig. 1 zeigt in einer schematischen Draufsicht 10 einen exemplarischen Kernreaktor 16, welcher in einem Reaktorkessel 14 angeordnet ist. Der Reaktorkessel 14 ist sternförmig von mehreren Dampferzeugern 13 umgeben, in deren jeweiliger Mitte sich ein Dampferzeugerrohr 12 beziehungsweise ein "Boiler Spine" befindet. Aus dem Reaktorkessel 14 im Betrieb strömendes erhitztes Kühlmittel wird kontinuierlich in die Dampferzeuger 13 eingeleitet, in welchen Wärmetauscher angeordnet sind, die das Kühlmittel abkühlen und Wasserdampf erzeugen. Der Wasserdampf wird im Weiteren für die Erzeugung von elektrischer Energie verwendet. Das abgekühlte Kühlmittel wird anschließend wieder in den Reaktorkessel 14 zurückgeleitet. Zur Verbesserung der thermischen Isolation sind die Dampferzeugerrohre 12 von einem jeweiligen Isolationsrohr umgeben, welches in einem schmalen Spaltabstand von ca. 8mm - 15mm angeordnet ist.

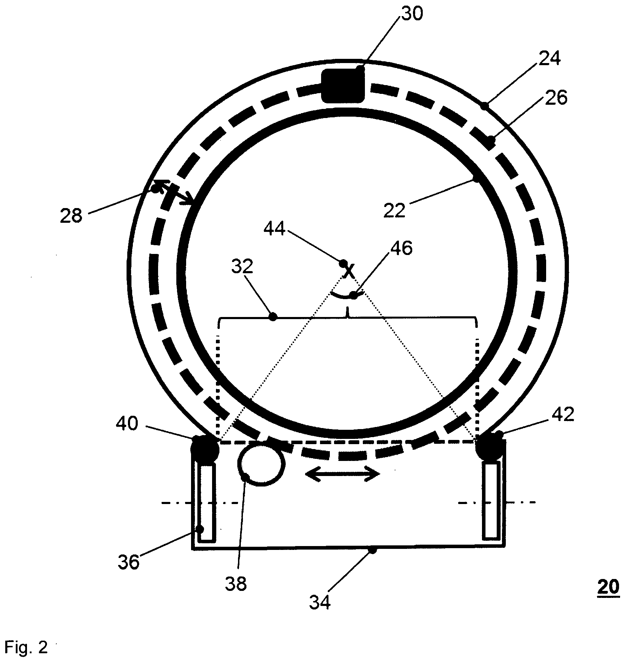

Figur 2 zeigt ein erstes exemplarisches Dampferzeugerprüfsystem 20 in einer schematischen Schnittansicht. Längs einer gedachten Mittelachse 44 erstreckt sich ein Dampferzeugerrohr 22, welches einen beispielhaften Innendurchmesser von 500mm und eine Wandungsdicke von 30mm - 35mm aufweist. Das Dampferzeugerrohr 22 ist von einem Hüllrohr 24 umgeben, welches zur thermischen Isolation vorgesehen ist. Zwischen der radialen Außenfläche des Dampferzeugerrohres 22 und der radialen Innenfläche des Hüllrohres 24 erstreckt sich ein hohlzylindrischer Spalt 28 mit einer Dicke von etwa 12mm, in welchem frei drehbar ein Ring 26 angeordnet ist.

Der Ring 26 weist eine Dicke von etwa 8mm und eine axiale Länge von beispielsweise 300mm auf und ist aus mehreren steifen Segmenten zusammengesetzt. In seinem oberen Bereich ist der Ring 26 mit einer Prüfvorrichtung 30 verbunden, welche zusammen mit dem Ring 26 in dem Spalt 28 drehbar ist. Die Prüfvorrichtung 30 weist ebenfalls eine radiale Dicke von 10mm auf und ist in diesem Fall eine Ultraschallsonde, wobei auch jede andere geeignete Prüfvorrichtung wie beispielsweise eine Kamera oder ein Werkzeug zur Aufnahme von Proben des Rohrmaterials verwendet werden kann, je nachdem welche Art der Rohrprüfung durchzuführen ist.

Das Hüllrohr 24 weist eine zum Zweck der Durchführung einer Prüfung vorgesehene Öffnung 32 auf, welche durch eine axiale Länge sowie einen Öffnungswinkel 46 gekennzeichnet ist. Radial oberhalb der Öffnung 32 befindet sich ein axial verfahrbares Trägersystem 34, welches ein Drehlager für den Ring 26 aufweist und diesen so exakt im Spalt 26 trägt. Eine Antriebsvorrichtung 38 ist dafür vorgesehen, den Ring 26 in jede beliebige Winkelposition in einem Bereich von wenigstens 360° zu drehen. In diesem Fall weist der Ring 26 zwei nicht dargestellte Reihen von umlaufenden Löchern auf, in welche ein jeweiliges Zahnrad der Antriebsvorrichtung 38 eingreift.

Das Trägersystem 34 ist seinerseits auf zahnstangenähnlich ausgeprägten axialen Führungsschienen 40, 42 angeordnet, auf welchen es zusammen mit dem Ring 26 axial verfahrbar ist. Hierzu ist eine Antriebsvorrichtung 36 vorgesehen, welche über ein jeweiliges Zahnrad mit den Führungsschienen 40, 42 in Wirkverbindung steht.

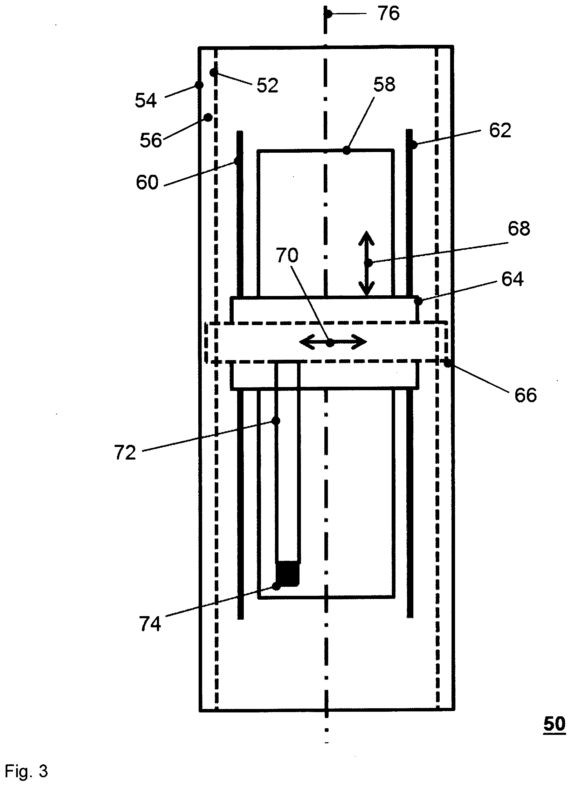

Figur 3 zeigt ein zweites exemplarisches Dampferzeugerprüfsystem 50 in einer schematischen Draufsicht. Um eine gedachte Mittelachse 76 erstreckt sich ein Dampferzeugerrohr 52, welches - weil es eigentlich aus dieser Perspektive nicht sichtbar ist - mit jeweils gestrichelten Linien angedeutet ist. Radial außen schließt sich ein hohlzylindrischer Spalt 56 sowie ein Hüllrohr 54 an. Das Hüllrohr weist in einem axialen Bereich von ca. 1,8m eine Öffnung 58 mit einem Öffnungswinkel von ca. 60° auf. Je nach Anzahl der Segmente eines Ringes kann sich auch ein davon abweichender Öffnungswinkel als sinnvoll erweisen.

Parallel zur Öffnung 58 sind beidseitig axiale Führungsschienen 60, 62 angeordnet, welche ebenso wie die Öffnung 58 nur temporär zum Zwecke der Durchführung einer Prüfung vorgesehen sind. Auf den Führungsschienen 60, 62 ist axial verfahrbar 68 ein Trägersystem 64 vorgesehen, welches einen im Spalt 56 angeordneten Ring 66 trägt, welcher mittels einer nicht gezeigten Antriebsvorrichtung drehbar 70 ist.

Eine Prüfvorrichtung 74 ist über ein flaches stabähnliches Verbindungselement 72, welches ebenfalls im Spalt 56 befindlich ist, axial beabstandet vom Ring 66 mit diesem verbunden. Somit ist es möglich, die Prüfvorrichtung 74 durch entsprechendes axiales Verfahren 68 des Ringes 66 beziehungsweise des diesen tragenden Trägersystems 64 auch in einen Spaltbereich zu verfahren, längs dessen sich die Öffnung 58 nicht erstreckt.

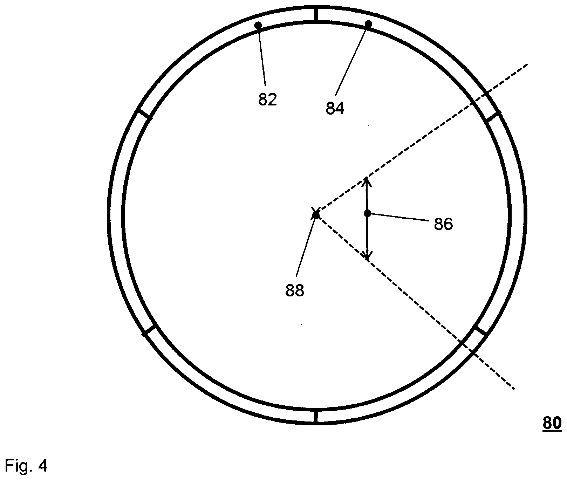

Figur 4 zeigt in einer schematischen Draufsicht einen segmentierten Ring 80, welcher aus mehreren Ringsegmenten 82, 84 besteht, die kreisförmig miteinander verbunden sind und um eine gedachte Mittelachse 88 angeordnet sind. Die Zahl der Ringsegmente 82, 84 beträgt in diesem Fall 6, so dass sich für jedes Ringsegment ein Bogenmaß von 60° ergibt. Ein Öffnungswinkel 86 einer Öffnung eines nicht gezeigten Hüllrohres ist mit gestrichelten Linien angedeutet und beträgt 75°. Deshalb ist es problemlos möglich, jedes einzelne Ringsegment 82, 84 durch die Öffnung in einen nicht gezeigten Spalt einzuführen und dort zu dem Ring 80 zu verbinden.

### Bezugszeichenliste

- 10: exemplarischer Kernreaktor mit Dampferzeugerrohren
- 12: Dampferzeugerrohr von Hüllrohr umgeben
- 13: Dampferzeuger
- 14: Reaktorkessel
- 16: Kernreaktor
- 18: Schutzwandung
- 20: erstes exemplarisches Dampferzeugerprüfsystem
- 22: Dampferzeugerrohr
- 24: Hüllrohr
- 26: drehbarer Ring
- 28: hohlzylindrischer Spalt
- 30: Prüfvorrichtung
- 32: Öffnung in Hüllrohr
- 34: Trägersystem
- 36: Antriebsvorrichtung zum axialen Verfahren
- 38: Antriebsvorrichtung zum Drehen
- 40: erste axiale Führungsschiene
- 42: zweite axiale Führungsschiene
- 44: Mittelachse
- 46: Öffnungswinkel
- 50: zweites exemplarisches Dampferzeugerprüfsystem
- 52: Dampferzeugerrohr
- 54: Hüllrohr
- 56: hohlzylindrischer Spalt
- 58: Öffnung in Hüllrohr
- 60: erste axiale Führungsschiene
- 62: zweite axiale Führungsschiene
- 64: Trägersystem
- 66: drehbarer Ring
- 68: axiale Verfahrrichtung
- 70: Drehrichtung
- 72: flaches Verbindungselement
- 74: Prüfvorrichtung
- 76: Mittelachse
- 80: segmentierter Ring
- 82: erstes Ringsegment
- 84: zweites Ringsegment
- 86: Öffnungswinkel
- 88: Mittelachse

## Patentansprüche

1. Engspaltprüfsystem (20, 50), umfassend ein sich in axialer (44, 76, 88) Richtung erstreckendes zu prüfendes Rohr, insbesondere ein Dampferzeugerrohr (22, 52), sowie eine von diesem mit einem hohlzylindrischen Spalt (28, 56) radial beabstandete umgebende Hülle, insbesondere ein Hüllrohr (24, 54),
**dadurch gekennzeichnet,**
**dass** die Hülle eine sich axial (44, 76, 88) erstreckende Öffnung (32, 58) mit einem quer zur axialen Richtung verlaufenden Öffnungswinkel (46, 86) aufweist und dass radial oberhalb der Öffnung (32, 58) ein axial (44, 76, 88) verfahrbares (68) Trägersystem (34, 64) vorgesehen ist, welches einen im Spalt (28, 56) angeordneten um das Rohr drehbaren (70) Ring (26, 80) mit einer Prüfvorrichtung (30, 74) trägt, welche durch ein jeweiliges axiales Verfahren des Trägersystems (34, 64) und eine jeweilige Drehung des Rings (26, 80) im Spalt (28, 56) über dem Rohr platzierbar ist.

2. Engspaltprüfsystem nach Anspruch 1, **dadurch gekennzeichnet, dass** die Prüfvorrichtung (30, 74) mit dem Ring (26, 80) über ein sich axial (44, 76, 88) im Spalt (28, 56) erstreckendes flaches Verbindungselement (72) verbunden ist und die Prüfvorrichtung (30, 74) dadurch auch in axialen Spaltbereichen, längs welcher sich die Öffnung (32, 58) nicht erstreckt, platzierbar ist.

3. Engspaltprüfsystem nach Anspruch 2, **dadurch gekennzeichnet, dass** am ringseitigen Ende des flachen Verbindungselementes (72) ein quer zur axialen (44, 76, 88) Richtung in die Öffnung (32, 58) eingeführtes Flachbandkabel vorgesehen ist, welches Anschlussleitungen für die Prüfvorrichtung (30, 74) aufweist.

4. Engspaltprüfsystem nach Anspruch 2 oder 3, **dadurch gekennzeichnet, dass** die axiale (44, 76, 88) Länge des flachen Verbindungselementes (72) die axiale Länge der Öffnung (32, 58) nicht übersteigt und dieses in axialer Ausrichtung durch die Öffnung (32, 58) in den Spalt (28, 56) einführbar ist.

5. Engspaltprüfsystem nach einem der vorherigen Ansprüche, **dadurch gekennzeichnet, dass** der Ring (26, 80) aus mehreren kreisförmig verbundenen Ringsegmenten (82, 84) besteht, wobei das Bogenmaß eines jeweiligen Ringsegmentes (82, 84) derart gewählt ist, dass dieses quer zur axialen (44, 76, 88) Richtung ausgerichtet durch die Öffnung (32, 58) in den Spalt (28, 56) einführbar ist.

6. Engspaltprüfsystem nach einem der vorherigen Ansprüche, **dadurch gekennzeichnet, dass** das Trägersystem (34, 64) eine Antriebsvorrichtung (36) zum axialen Verfahren aufweist.

7. Engspaltprüfsystem nach einem der vorherigen Ansprüche, **dadurch gekennzeichnet, dass** das Trägersystem (34, 64) eine Antriebsvorrichtung (38) zum Drehen des Ringes (26, 80) aufweist.

8. Engspaltprüfsystem nach Anspruch 7, **dadurch gekennzeichnet, dass** der Ring (26, 80) wenigstens eine umlaufende Reihe von äquidistant angeordneten Eingriffslöchern aufweist, mittels welcher eine Drehbewegung der Antriebsvorrichtung (38) zum Drehen des Ringes (26, 80) auf diesen übertragbar ist.

9. Engspaltprüfsystem nach einem der vorherigen Ansprüche, **dadurch gekennzeichnet, dass** wenigstens eine mit der Hülle verbundene axiale Führungsschiene (40, 42, 60, 62) vorgesehen ist, auf welcher das Trägersystem (34, 64) zusammen mit dem Ring (26, 80) verfahrbar ist.

10. Engspaltprüfsystem nach einem der vorherigen Ansprüche, **dadurch gekennzeichnet, dass** der Ring (26, 80) um wenigstens 360° drehbar ist.

11. Engspaltprüfsystem nach einem der vorherigen Ansprüche, **dadurch gekennzeichnet, dass** dieses eine Steuervorrichtung aufweist, mittels welcher eine axiale Verfahrbewegung (68) des Trägersystems (34, 64) sowie eine Drehbewegung (70) des Ringes (26, 80) koordinierbar ist.

12. Verfahren zum Installieren eines Engspaltprüfsystems (20, 50) mit einem sich in axialer (44, 76, 88) Richtung erstreckenden zu prüfenden Rohr, insbesondere einem Dampferzeugerrohr (22, 52), sowie einer von diesem in einem hohlzylindrischen Spalt (28, 56) radial beabstandeten umgebenden Hülle, insbesondere ein Hüllrohr (24, 54), umfassend folgende Schritte:
• Vorsehen einer sich axial (44, 76, 88) erstreckenden Öffnung (32, 58) in der Hülle mit einem quer zur axialen Richtung verlaufenen Öffnungswinkel (46, 86),
• sequentielles Einführen und kreisförmiges Verbinden von mehreren Ringsegmenten (82, 84) zu einem (70) drehbaren Ring (26, 80) im Spalt (28, 56),
• Verbinden einer sich längs der Öffnung (32, 58) erstreckenden Führungsschiene (40, 42, 60, 62) mit dem Hüllrohr (24, 54),
• Vorsehen eines auf der Führungsschiene (40, 42, 60, 62) beweglichen Trägersystems (34, 64) für den Ring (26, 80), mittels welcher dieser im Spalt (28, 56) längs der Öffnung (32, 58) axial verfahrbar (68) und drehbar (70) ist.
• Verbinden einer Prüfvorrichtung (30, 74) mit dem Ring (26, 80),

## Claims

1. Narrow gap inspection system (20, 50), comprising a tube to be inspected, in particular a boiler tube (22, 52), which extends in the axial (44, 76, 88) direction and, surrounding this at a radial distance with a hollow-cylindrical gap (28, 56), a casing, in particular a casing tube (24, 54),
**characterized**
**in that** the casing has an axially (44, 76, 88) extending opening (32, 58) with an opening angle (46, 86) running perpendicular to the axial direction, and in that radially over the opening (32, 58) there is provided an axially (44, 76, 88) mobile (68) support system (34, 64) which supports a ring (26, 80) which is arranged in the gap (28, 56) and is able to rotate (70) about the tube and has an inspection device (30, 74) that can be placed over the tube by means of a respective axial movement of the support system (34, 64) and a respective rotation of the ring (26, 80) in the gap (28, 56).

2. Narrow gap inspection system according to Claim 1, **characterized in that** the inspection device (30, 74) is connected to the ring (26, 80) via a flat connecting element (72) extending axially (44, 76, 88) in the gap (28, 56), and the inspection device (30, 74) can thereby also be placed in axial gap regions along which the opening (32, 58) does not extend.

3. Narrow gap inspection system according to Claim 2, **characterized in that** at the ring-side end of the flat connecting element (72) there is provided a ribbon cable introduced perpendicular to the axial (44, 76, 88) direction into the opening (32, 58), which cable has connection lines for the inspection device (30, 74).

4. Narrow gap inspection system according to Claim 2 or 3, **characterized in that** the axial (44, 76, 88) length of the flat connecting element (72) does not exceed the axial length of the opening (32, 58) and the connecting element can be inserted in axial orientation through the opening (32, 58) into the gap (28, 56).

5. Narrow gap inspection system according to one of the preceding claims, **characterized in that** the ring (26, 80) consists of multiple circle-connected ring segments (82, 84), wherein the size of the arc of a respective ring segment (82, 84) is chosen such that this segment can be introduced into the gap (28, 56) through the opening (32, 58) when oriented transversely to the axial (44, 76, 88) direction.

6. Narrow gap inspection system according to one of the preceding claims, **characterized in that** the support system (34, 64) has a drive device (36) for axial movement.

7. Narrow gap inspection system according to one of the preceding claims, **characterized in that** the support system (34, 64) has a drive device (38) for rotating the ring (26, 80).

8. Narrow gap inspection system according to Claim 7, **characterized in that** the ring (26, 80) has at least one circumferential row of evenly spaced engagement holes by means of which a rotation of the drive device (38) can be transmitted to the ring (26, 80) in order to rotate the latter.

9. Narrow gap inspection system according to one of the preceding claims, **characterized in that**.there is provided at least one axial guide rail (40, 42, 60, 62) connected to the casing, on which rail the support system (34, 64), together with the ring (26, 80), can be made to move.

10. Narrow gap inspection system according to one of the preceding claims, **characterized in that** the ring (26, 80) can be rotated through at least 360°.

11. Narrow gap inspection system according to one of the preceding claims, **characterized in that** the system has a control device which can coordinate an axial movement (68) of the support system (34, 64) with a rotation (70) of the ring (26, 80).

12. Method for installing a narrow gap inspection system (20, 50), with a tube to be inspected, in particular a boiler tube (22, 52), which extends in the axial (44, 76, 88) direction and, surrounding this at a radial distance with a hollow-cylindrical gap (28, 56), a casing, in particular a casing tube (24, 54), comprising the following steps:
• providing, in the casing, an opening (32, 58) extending axially (44, 76, 88) with an opening angle (46, 86) running transversely to the axial direction,
• sequential insertion and circular connection of multiple ring segments (82, 84) to give a rotatable (70) ring (26, 80) in the gap (28, 56),
• connecting, to the casing tube (24, 54), a guide rail (40, 42, 60, 62) extending along the opening (32, 58),
• providing a support system (34, 64) for the ring (26, 80), which system is able to move on the guide rail (40, 42, 60, 62) and by means of which the ring can be moved axially (68) and rotated (70) in the gap (28, 56) along the opening (32, 58),
• connecting an inspection device (30, 74) to the ring (26, 80).

## Revendications

1. Système de contrôle à intervalles serrés (20, 50), comprenant un tube à contrôler s'étendant en direction axiale (44, 76, 88), en particulier un tube de générateur de vapeur (22, 52), ainsi qu'une enveloppe périphérique, en particulier un tube enveloppe (24, 54), radialement espacée de celui-ci par un intervalle cylindrique creux (28, 56), **caractérisé en ce que** l'enveloppe présente une ouverture (32, 58) s'étendant axialement (44, 76, 88) avec un angle d'ouverture (46, 86) s'étendant transversalement à la direction axiale et **en ce qu'**il est prévu radialement au-dessus de l'ouverture (32, 58) un système de support déplaçable (34, 64), qui porte un anneau (26, 80) disposé dans l'intervalle (28, 56) et pouvant tourner (70) autour du tube avec un dispositif de contrôle (30, 74), qui peut être placé au-dessus du tube par un déplacement axial respectif du système de support (34, 64) et une rotation respective de l'anneau (26, 80) dans l'intervalle (28, 56).

2. Système de contrôle à intervalles serrés selon la revendication 1, **caractérisé en ce que** le dispositif de contrôle (30, 74) est relié à l'anneau (26, 80) par un élément de liaison plat (72) s'étendant axialement (44, 76, 88) dans l'intervalle (28, 56) et le dispositif de contrôle (30, 74) peut ainsi être placé aussi dans des régions axiales de l'intervalle, le long desquelles l'ouverture (32, 58) ne s'étend pas.

3. Système de contrôle à intervalles serrés selon la revendication 2, **caractérisé en ce qu'**il est prévu sur l'extrémité côté anneau de l'élément de liaison plat (72) un câble plat introduit dans l'ouverture (32, 58) transversalement à la direction axiale (44, 76, 88), qui présente des conducteurs de raccordement pour le dispositif de contrôle (30, 74).

4. Système de contrôle à intervalles serrés selon la revendication 2 ou 3, **caractérisé en ce que** la longueur axiale (44, 76, 88) de l'élément de liaison plat (72) ne dépasse pas la longueur axiale de l'ouverture (32, 58) et celui-ci peut être introduit dans l'intervalle (28, 56) en alignement axial à travers l'ouverture (32, 58).

5. Système de contrôle à intervalles serrés selon l'une quelconque des revendications précédentes, **caractérisé en ce que** l'anneau (26, 80) se compose de plusieurs segments annulaires (82, 84) assemblés en forme de cercle, dans lequel la longueur d'arc d'un segment annulaire respectif (82, 84) est choisie de telle manière que celui-ci puisse être introduit dans l'intervalle (28, 56) à travers l'ouverture (32, 58) en étant orienté transversalement à la direction axiale (44, 76, 88).

6. Système de contrôle à intervalles serrés selon l'une quelconque des revendications précédentes, **caractérisé en ce que** le système de support (34, 64) présente un dispositif d'entraînement (36) pour le déplacement axial.

7. Système de contrôle à intervalles serrés selon l'une quelconque des revendications précédentes, **caractérisé en ce que** le système de support (34, 64) présente un dispositif d'entraînement (38) pour la rotation de l'anneau (26, 80).

8. Système de contrôle à intervalles serrés selon la revendication 7, **caractérisé en ce que** l'anneau (26, 80) présente au moins une série périphérique de trous d'intervention disposés à équidistance, au moyen desquels un mouvement de rotation du dispositif d'entraînement (38) peut être transmis à l'anneau (26, 80) pour le faire tourner.

9. Système de contrôle à intervalles serrés selon l'une quelconque des revendications précédentes, **caractérisé en ce qu'**il est prévu au moins un rail de guidage axial (40, 42, 60, 62) assemblé à l'enveloppe, sur lequel le système de support (34, 64) est déplaçable en même temps que l'anneau (26, 80).

10. Système de contrôle à intervalles serrés selon l'une quelconque des revendications précédentes, **caractérisé en ce que** l'anneau (26, 80) peut tourner d'au moins 360°.

11. Système de contrôle à intervalles serrés selon l'une quelconque des revendications précédentes, **caractérisé en ce qu'**il présente un dispositif de commande, au moyen duquel un mouvement de déplacement axial (68) du système de support (34, 64) ainsi qu'un mouvement de rotation (70) de l'anneau (26, 80) peuvent être coordonnés.

12. Procédé pour installer un système de contrôle à intervalles serrés (20, 50) avec un tube à contrôler s'étendant en direction axiale (44, 76, 88), en particulier un tube de générateur de vapeur (22, 52), ainsi qu'une enveloppe périphérique, en particulier un tube enveloppe (24, 54), radialement espacée de celui-ci par un intervalle cylindrique creux (28, 56), comprenant les étapes suivantes:
• prévoir une ouverture (32, 58) s'étendant axialement (44, 76, 88) dans l'enveloppe avec un angle d'ouverture (46, 86) orienté transversalement à la direction axiale,
• introduire de façon séquentielle et assembler en forme de cercle plusieurs segments d'anneau (82, 84) en un anneau rotatif (26, 80) dans l'intervalle (28, 56),
• assembler un rail de guidage (40, 42, 60, 62) s'étendant le long de l'ouverture (32, 58) avec le tube enveloppe (24, 54),
• prévoir un système de support (34, 64) mobile sur le rail de guidage (40, 42, 60, 62) pour l'anneau (26, 80), au moyen duquel celui-ci peut se déplacer axialement (68) le long de l'ouverture (32, 58) et tourner (70) dans l'intervalle (28, 56),
• assembler un dispositif de contrôle (30, 74) à l'anneau (26, 80).
